# EUROPÄISCHE PATENTANMELDUNG

(11) **EP 0 806 287 A1**
(43) Veröffentlichungstag der Anmeldung: **12.11.1997**
(21) Anmeldenummer: 97201279.3
(22) Anmeldetag: 07.05.1997
(51) Int. Cl.: B29D 30/56

(54) **Reifentechnologie geschichtete Slicks**

(30) Priorität: 07.05.1996 NL 1003053
(71) Anmelder: Kuijs, C.P.A., 5266 AW Cromvoirt (NL)
(72) Erfinder: Kuijs, C.P.A., 5266 AW Cromvoirt (NL)

(57) **Zusammenfassung**

Die Erfindung betrifft Runderneuern eines Luftreifens. Hierbei wird aus einem Schlauch ein Band gestanzt, das ansschließend auf eine Reifenkarkasse geklebt wird. Dadurch, daß ein kalt vulkanisierbarer Kleber verwendet wird, ist eine Vulkanisiervorrichtung nicht nötig.

## Beschreibung

### Der geschichtete Reifen

Entwicklung um John Boyd Dunlops Prinzip Luftreifen. Runderneuerung von Reifen ohne Vulkanisierungsapparatur.

### Der geschichtete Reifen

### Methode:

Stanzen Sie einen Gürtel aus dem Schlepper-schlauch. Legen Sie den Gürtel um den Reifen.
Bringen Sie Klebstoff auf den Gürtel und den Reifen.
Heften sie dann den Gürtel auf den Reifen und die Schulter für eine neue Lauffläche Für geschichtete Reifen.

## Patentansprüche

1. Schlussfolgerung:
Gummi-oder Synthetischer Gummi gürtel heftet man mit klebstoff um John Boyd Dunlops Princip Luftreifen für eine neue Lauffläche für geschichtete Reifen.
Kernzeichen:
Keine Vulkanisierungapparatur Reifen und Schlauch werden verklebt Niedrige Shore-Zahl auf stiefem Reifen hoher Starkekoeffizient.
Veredlung von steifen Reifen.
Lauffläche erreicht schnell hohe Temperatur.
Reifen mit langer Lebensdaurer.
Das Schöpfer von Reifen für verscheidene Anwendungen.
Geschichteter Reifen Klebnaht zwischen Basis und Lauffläche. Schneller Wechsel der Sohle.
